(19) Europäisches Patentamt
European Patent Office
Office européen des brevets

(11) Publication number: **0 180 471 B1**

(12) # EUROPEAN PATENT SPECIFICATION

(45) Date of publication of patent specification: **04.03.92**

(51) Int. Cl.⁵: **C08L 67/02**, C08L 63/02, C08L 51/04, C08G 63/87, C08L 69/00

(21) Application number: **85307885.5**

(22) Date of filing: **31.10.85**

The file contains technical information submitted after the application was filed and not included in this specification

(54) **Novel thermoplastic polyester compositions containing certain low molecular weight depoxide resins and having improved impact behaviour.**

(30) Priority: **31.10.84 US 666684**

(43) Date of publication of application: **07.05.86 Bulletin 86/19**

(45) Publication of the grant of the patent: **04.03.92 Bulletin 92/10**

(84) Designated Contracting States: **BE DE FR GB IT NL**

(56) References cited:
**US-A- 4 101 601**
**US-A- 4 195 134**

(73) Proprietor: **CELANESE CORPORATION**
**1211 Avenue of the Americas**
**New York New York 10036(US)**

(72) Inventor: **McNally, Donal**
**62 Mountain Avenue**
**Chatham New Jersey(US)**
Inventor: **La Nieve, H. Leslie**
**14 Roberts Road**
**Warren New Jersey(US)**
Inventor: **Costanzo, Jerome L.**
**219 Adamsville Road**
**Bridgewater New Jersey(US)**

(74) Representative: **De Minvielle-Devaux, Ian Benedict Peter et al**
**CARPMAELS & RANSFORD 43, Bloomsbury Square**
**London WC1A 2RA(GB)**

EP 0 180 471 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

This invention relates to the production of thermoplastic polyester compositions.

### BACKGROUND OF THE INVENTION

Poly ($C_2$-$C_4$ alkylene terephthalate) such as polyethylene terephthalate (PET) or polybutylene terephthalate (PBT) are well known resins for a number of uses including molding applications. Such resins are frequently blended with various additives to improve properties such as impact strength, resistance to warping, flame resistance, and thermal stability. U.S. Patents 4,393,153; 4,180,494; 4,096,202; and 4,034,013 describe certain impact modifiers which have been suggested for use with polyalkylene terephthalates. U.S. Patents 4,010,219 and 4,101,601 describe certain epoxy compounds which have been suggested for use in imparting improved tensile and melt strength properties to polybutylene terephthalate molding compounds. U.S. Patent 4,195,134 describes a combination of certain impact modifiers and certain diepoxy compounds for use in polyalkylene terephalate molding compositions for improving the hydrolytic stability of such compositions.

The search has continued, however, for polyalkylene terephthalate molding compositions having even further improved impact behavior. The present invention was made as a result of such a search.

### SUMMARY OF THE INVENTION

It is accordingly an object of the present invention to provide improved thermoplastic polyester compositions suitable for the production of molded articles as well as a process for producing molded articles from such compositions and molded articles of such compositions. As compared with known prior art compositions, molded articles of the present invention have a combination of desirable properties including improved impact behavior without sacrifice of other desirable properties.

In accordance with a broad aspect of the present invention, thermoplastic polyester compositions are provided which comprise a blend of:

(a) at least about 20 weight percent of at least one poly ($C_2$-$C_4$ alkylene terephthalate);

(b) between about 0.1 and about 8 weight % based on poly ($C_2$-$C_4$ alkylene terephthalate) of at least one diepoxide resin having a molecular weight between about 350 and about 2100 and consisting essentially of at least one condensation product of bisphenol A or brominated bisphenol A and epihalohydrin and represented by the general formula (I):

Formula (I)

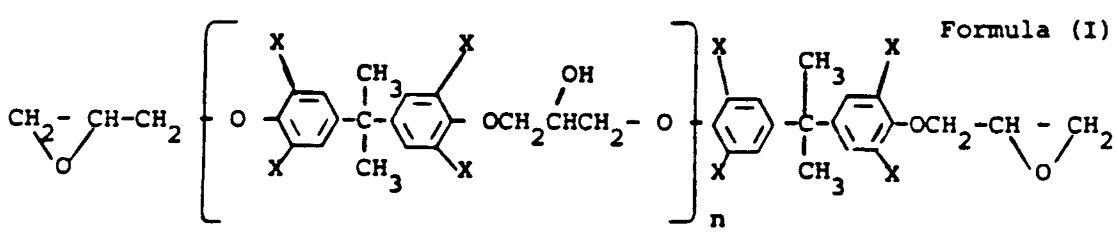

wherein X is hydrogen or bromine; and n is an average number ranging above zero and less than about 2.3;

(c) a catalytic amount of at least one catalyst selected from the group consisting of alkyl triphenyl phosphonium halides and alkenyl triphenyl phosphonium halides; and

(d) between about 5 and about 30 weight % based on poly ($C_2$-$C_4$ alkylene terephthalate) of at least one butadiene-based multiphase composite polymer having an elastomeric core of polybutadiene or polybutadiene/styrene and a thermoplastic shell of polymethylmethacrylate.

In a preferred aspect of the present invention, the thermoplastic polyester composition consists essentially of at least about 60 weight percent (wt. %) polybutylene terephthalate (PBT) having an initial intrinsic viscosity between about 0.4 and about 1.3 deciliters per gram (dl/g) as determined in orthochlorophenol at 25 °C; a diepoxide resin of Formula (I) having a molecular weight between about 370 and 400; butyltriphenylphosphonium bromide catalyst; and 5 to 30 percent based on polybutylene terephthalate of a multiphase composite polymer having an elastomeric first phase of butadiene or butadiene-styrene and a

thermoplastic final phase of polymethylmethacrylate.

Further preferred aspects involve the use of polycarbonate and/or polyarylate resins and/or glass reinforcing fibers and mineral fillers in amounts between about 1 and about 100 weight percent based on polyalkylene terephthalate as well as preferred multiphase polymer and diepoxide resins as described below.

A central feature of the present invention is the surprising discovery that only certain low molecular weight diepoxide resins impart improved impact behaviour to catalyzed blends of PBT and butadiene-based multiphase polymer. The desirable effects of improved impact behaviour are not found if, for example, higher molecular weight diepoxide resins are used at the same or similar epoxide concentration.

Other objects, aspects and advantages of the present invention will become apparent to one skilled in the art in view of the following:

## DESCRIPTION OF THE PREFERRED EMBODIMENTS

Polyalkylene terephthalates suitable for use in the invention include for instance polyethylene terephthalate, polypropylene terephthalate, and polybutylene terephthalate. Polybutylene terephthalate (PBT) is especially suitable and in a preferred embodiment of the invention comprises at least about 60 weight percent of the thermoplastic polyester composition. The polyalkylene terephthalate used may be a single polyalkylene terephthalate or a blend of suitable polyalkylene terephthalates. As mentioned the composition of the invention includes at least about 20 weight percent poly ($C_2$-$C_4$ alkylene terephthalate). An especially preferred poly ($C_2$-$C_4$ alkylene terephthalate) is polybutylene terephthalate having an intrinsic viscosity between about 0.4 and about 1.3 dl/g.

The diepoxide resin of Formula (I) above is present in compositions of the present invention in amounts between about 0.1 and about 8, preferably about one and about 3.5, and most preferably 1.5 to 2.0 weight percent based on poly ($C_2$-$C_4$ alkylene terephthalate).

Suitable diepoxy compounds which may be used in the practice of this invention include polycondensates of Formula (I) of epihalohydrin such as epichlorohydrin with diphenylolpropane (so called bisphenol "A"), or brominated bisphenol A such as tetrabromodiphenylolpropane, in any convenient ratio so that the resulting resins will have terminal epoxy groups and average molecular weights between about 350 and about 2,100, preferably between about 360 and about 1,000, and most preferably between 370 and 400. Illustrative examples by standard trade designations include the commercially available epoxy resins Epi-Rez 509, Epi-Rez 510, Epi-Rez 5163, and Epi-Rez 5183.

The catalyst employed in the present invention may be selected from the group consisting of alkyl triphenyl phosphonium halide and alkenyl triphenyl phosphonium halide. The alkyl groups may contain from one to ten carbon atoms, the alkenyl groups may contain from two to six carbon atoms, and the halide anion is selected from the group consisting of chloride and bromide.

Alkyl triphenyl phosphonium bromides and alkenyl triphenyl phosphonium bromides are preferred catalysts. Allyl triphenyl phosphonium bromide and n-butyl triphenyl phosphonium bromide are particularly preferred.

The use of these compounds in catalytic amounts is advantageous in that the polymers produced in the process of the present invention are both less brittle and less intensely colored than those produced using the same reactants and reaction conditions but using other catalysts such as amine catalysts.

The catalyst employed in the present invention may be used in catalytic amounts, i.e., generally from about 0.01 to about 0.1, and preferably from about 0.02 to about 0.06% by weight based upon the weight of the polyalkylene terephthalate present.

The catalyst and diepoxide may be present in a mole ratio of diepoxide to catalyst of generally from about 10 to 1 to about 100 to 1, and preferably from about 20 to 1 to about 50 to 1.

As noted above, the thermoplastic polyester compositions of the present invention contain at least one butadiene-based multiphase composite polymer. The multiphase composite polymer, sometimes referred to as core/shell elastomer, has an elastomeric first phase or core of polybutadiene or polybutadiene/styrene and a thermoplastic final phase or shell of polymethylmethacrylate. It may also have an intermediate phase of styrene.

The most preferred multiphase composite polymers are methacrylated butadiene-styrene copolymer compositions marketed by Rohm and Haas under the trade designations KM-653 and KM-680.

For further descriptions and examples of various butadiene-based multiphase polymers suitable for use in the present invention, reference may had to the aforementioned U.S. Patents 4,034,013; 4,180,494; and 4,393,153.

Compositions and products of the present invention may also contain about one to about 200,

preferably about 60 to 120 weight percent based on polyalkylene terephthalate of aromatic polycarbonate or polyarylates such as bisphenol-A-isophthalate-terephthalate-polyester. The effect of incorporating such polycarbonate and polyarylate is to develop impact behavior with lesser amounts of composite polymer. For further descriptions and examples of such polycarbonates and polyarylates, reference may be had to U.S. Patents 4,180,494 and 4,221,694.

Compositions and products of the present invention may also contain up to about 25 weight percent, more typically up to 10 percent, based on polyalkylene terephthalate of suitable flame retardant additives, such as decabromodiphenyl ether and antimony oxide, and may contain relatively minor amounts of other materials which do not unduly affect the desired characteristics of finished products. Such additional materials may, depending upon the particular compositions employed and products desired include for instance, colorants or lubricants. Where present such additional materials other than polycarbonate, polyarylate, flame retardants, fibers or filler, normally comprise not more than about 10 weight percent of the total molding composition or finished product.

Compositions and products of the present invention may also include reinforcing fiber or inert filler of conventional types and amounts. In a preferred embodiment between about one and about 100 weight percent based on polyalkylene terephthalate of glass reinforcing fibers is present. Inert filler material where used is normally present in amounts between about one and about 100 weight percent based on polyalkylene terephthalate and may include such materials as glass spheres, clay, silica, silicates and oxides,

In preparing compositions of the present invention the various ingredients may be prepared by conventional methods and blended in any suitable manner such as by dry blending or melt blending, blending in extruders, heated rolls, or other types of mixers. Conventional master batching techniques may also be used. Suitable manufacture and blending techniques are well known in the art and need not be described in detail here.

Compositions according to the invention are especially useful in imparting improved impact behavior to PBT of relatively low initial or starting intrinsic viscosity, especially where the viscosity of the PBT is below 1.0 dl/g such as in the range of about 0.5-1.0 dl/g. This makes the present invention especially significant with respect to such PBT of relatively low initial intrinsic viscosity since, as is well known, PBT of higher intrinsic viscosity is generally more expensive to manufacture. Thus by use of the present invention it is frequently possible to employ for a given end use PBT compositions utilizing PBT of significantly lower initial intrinsic viscosity than would normally be considered acceptable in terms of impact behavior.

The following examples are intended to illustrate the invention. In the examples all quantities are given in terms of weight percent based on total compositions unless otherwise stated.

In order to evaluate impact behavior of the various compositions tested, samples of the compositions in question were injection molded to produce standard ASTM test specimens. Specimens were then tested for notched Izod impact strength in accordance with ASTM procedure D-256 (except not under controlled humidity conditions which should not materially affect the results).

Compositions tested as reported herein were prepared from several different PBT compositions as indicated in the examples. The compositions were compounded on a 2.5 inch Egan extruder using the following conditions: temperature 260 °C., pressure 500-2000 psi (3447 - 13789 KPa), and screw RPM 75-150. In each case the pelletized extrudate was then molded on a reciprocating screw injection molding machine to provide test specimens.

In the examples the term "epoxy" designates diepoxide resins marketed by Celanese Specialty Operations as their epoxy resins Epi-Rez 510, Epirez 522C, etc. and the term "elastomer" designates multiphase composite polymers marketed by Rohm & Haas as their acryloids KM 653 and KM 680.

EXAMPLES 1-2

For these examples a number of compositions were prepared utilizing PBT having an intrinsic viscosity of 1.0 dl/g, .035 percent n-butyltriphenylphosphonium bromide, and containing additional components as indicated in Table I below. These samples were tested for notched Izod impact strength as described above. The results of these tests are also shown in Table I.

TABLE I

NOTCHED IZOD IMPACT, FT.-LB./IN. [J/m]

EXAMPLE 1

| | % ELASTOMER (KM 653) | % EPOXY (EPIREZ 510) | % EPOXY (EPIREZ 522C) | NOTCHED IZOD |
|---|---|---|---|---|
| Control | 15 | - | - | 1.49 [79.54] |
| Run 1 | 15 | 1.5 | - | 11.80 [629.88] |
| Run 2 | 15 | 1.5 | - | 16.40 [875.43] |
| Comparative | 15 | - | 4.7[b] | N.M.[a] |

Example 2

| | % ELASTOMER (KM 680) | % EPOXY (EPIREZ 510) | % EPOXY (EPIREZ 522C) | NOTCHED IZOD |
|---|---|---|---|---|
| Control | 15 | - | - | 1.82 [97.15] |
| Run 1 | 15 | 1.5 | - | 3.89 [207.65] |
| Comparative | 15 | - | 4.7 | 1.35 [72.06] |

(a) Not measured, bars out of the mold were too brittle.

(b) Weight percent required to provide same epoxide functionality as 1.5% EPIREZ-510.

EXAMPLES 3-10

Example 1 was repeated using varying amounts of Acryloid KM 653, and yielded high notched Izod values. As shown in Table II below, high room temperature impact was found with KM 653 down to 12.5%, while at 17.5%, a notched Izod of 5.43 ft-lb/in. [289.85 J/m] was obtained at -20° C.

TABLE II

| NOTCHED IZOD, FT-LB/IN. [J/m] | | | | | |
|---|---|---|---|---|---|
| Example | % Elastomer (KM 653) | R.T. | 0° C. | -20° C. | -29° C. |
| 3 | 12.5 | 16.3 [870.09] | 11.8[a]/4.5[b] [629.88/240.21] | 1.82 [97.15] | --- |
| 4 | 15.0 | 16.4 [875.43] | 11.9[a]/3.7[b] [635.22/197.51] | 2.16 [115.30] | --- |
| 5 | 17.5 | 18.4 [982.19] | 15.2 [811.38] | 5.43 [289.85] | 1.57 [83.81] |
| 6 | 20.0 | 17.2 [918.14] | 16.9 [902.12] | 4.90 [261.56] | 2.63 [140.39] |
| 7 | 25.0 | 17.6 [939.49] | 18.3 [976.85] | 2.91 [155.34] | 2.75 [146.80] |

[a] partial tear failure
[b] full break

At the 15% level of KM 653, increasing the epoxy resin level from 1.25% to 1.75% caused an increase in impact strength at 0° C and -20° C as shown in Table III below.

TABLE III

| NOTCHED IZOD IMPACT, FT-LB/IN. [J/m] | | | | |
|---|---|---|---|---|
| Example | % Epoxy Resin (Epi-Rez 510) | R.T. | Ft-lb/in. 0° C. | [J/m] -20° C. |
| 8 | 1.25 | 16.3 [870.09] | 5.5[a]/3.3[b] [293.59/176.15] | 1.30 [69.39] |
| 9 | 1.50 | 16.4 [875.43] | 11.9[a]/3.7[b] [635.22/197.51] | 1.82 [97.15] |
| 10 | 1.75 | 16.3 [870.09] | 12.3[a]/4.5[b] [656.57/240.21] | 2.41 [128.65] |

[a] partial tear failure
[b] full break

The above examples show the unexpected advantage to be had by using the butadiene-based multiphase polymer latex and certain epoxy resins and catalyst additives in accordance with the invention in terms of improving the impact behavior of PBT molding compositions.

While the invention has been described above with respect to certain embodiments thereof,

## Claims

**1.** A thermoplastic polyester composition having improved impact strength comprising a blend of:
(a) at least 20 weight percent poly ($C_2$-$C_4$ alkylene terephthalate);
(b) between 0.1 and 8 weight % based on poly ($C_2$-$C_4$ alkylene terephthalate) of a diepoxide resin having a molecular weight between 350 and 2,100 and consisting essentially of at least one condensation product of bisphenol A or brominated bisphenol A and epihalohydrin and represented by the general formula (I):

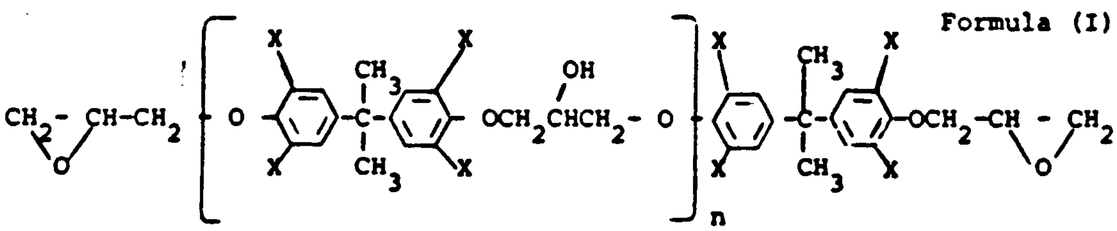

Formula (I)

wherein X is bromine or hydrogen and n is an average number above zero and less than 2.3;
(c) a catalytic amount of at least one catalyst selected from the group consisting of alkyl triphenyl phosphonium halides and alkenyl triphenyl phosphonium halides; and
(d) between 5 and 30 weight % based on poly ($C_2$-$C_4$ alkylene terephthalate) of a butadiene-based multiphase composite polymer having an elastomeric core of polybutadiene or polybutadiene/styrene and a thermoplastic shell of polymethylmethacrylate.

**2.** A composition according to claim 1 wherein the thermoplastic polyester composition includes at least about 60 weight percent polybutylene terephthalate having an intrinsic viscosity between 0.4 and 1.3 dl/g as determined in orthochlorophenol at 25° C.

**3.** A composition according to claim 1 or 2, wherein the diepoxide resin of the formula (I) has a molecular weight between 360 and 1,000 and wherein the catalyst is allyl triphenyl phosphonium bromide or n-butyl triphenyl phosphonium bromide.

**4.** A composition according to claim 1, 2 or 3 further containing between 1 and 100 weight percent based on polyalkylene terephthalate of glass reinforcing fibers.

**5.** A composition according to claim 1, 2 or 3 further containing from one to 200 weight percent based on polyalkylene terephthalate of aromatic polycarbonate.

**6.** A composition according to claim 1, 2 or 3 further containing from one to 200 weight percent based on

polyalkylene terephthalate of polyarylate.

**7.** A composition according to claim 1, 2 or 3 further containing between one and 100 weight percent based on polyalkylene terephthalate of inert filler.

**8.** A composition according to claim 1, 2 or 3 further containing up to twenty-five weight percent based on polyalkylene terephthalate of flame retardant additive.

**9.** A thermoplastic polyester composition having improved impact strength consisting essentially of a blend of:

(a) at least 60 weight percent polybutylene terephthalate having an intrinsic viscosity between 0.5-1.0 dl/g as determined in orthochlorophenol at 25° C;

(b) between 1.5 and 2.0 weight % based on polybutylene tereptthalate of a diepoxide resin having a molecular weight between 370 and 400 and consisting essentially of at least one condensation product of bisphenol A and epichlorohydrin and represented by the general formula (I):

Formula (I)

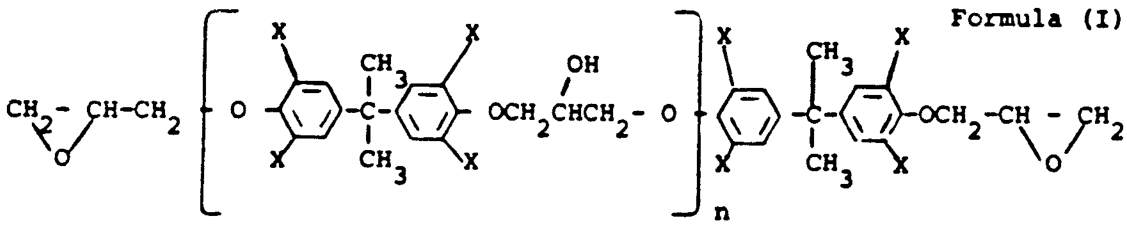

wherein n is an average number above zero and less than about 2.3;

(c) a catalytic amount of at least one catalyst selected from the group consisting of alkyl triphenyl phosphonium bromide and alkenyl triphenyl phosphonium bromide; and

(d) between 5 and 30 weight % based on polybutylene terephthalate of a butadiene-based multi-phase composite polymer having an elastomeric core of polybutadiene or polybutadiene/styrene and a thermoplastic shell of polymethylmethacrylate.

**10.** A composition according to claim 9 further containing between 5 and 100 weight percent based on polybutylene terephthalate of glass reinforcing fibers.

**11.** A composition according to claim 9 further containing from one to 200 weight percent based on polybutylene terephthalate of aromatic polycarbonate.

**12.** A composition according to claim 9 further containing from one to 200 weight percent based on polybutylene terephthalate of polyarylate.

**Revendications**

**1.** Composition de polyester thermoplastique ayant une meilleure résistance au choc, comprenant un mélange de

(a) au moins 20 pour cent en poids de poly(téréphtalate d'alkylène $C_2$-$C_4$) ;

(b) entre 0,1 et 8% en poids,en se basant sur le poly(téréphtalate d'alkylène $C_2$-$C_4$), d'une résine diépoxyde ayant un poids moléculaire entre 350 et 2.100 et consistant essentiellement en au moins un produit de condensation de bisphénol A ou de bisphénol A bromé et d'épihalohydrine et représentée par la formule générale (I) :

Formule (I)

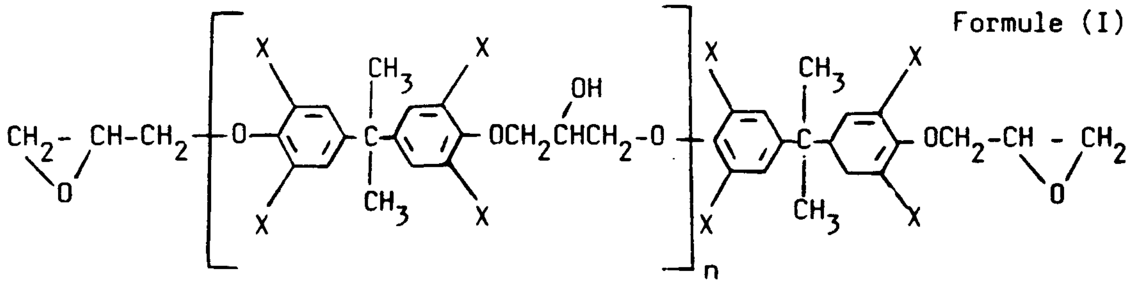

où X est brome ou hydrogène et n est un nombre moyen plus grand que zéro et plus petit que 2,3 ;

(c) une quantité catalytique d'au moins un catalyseur choisi dans le groupe consistant en halogénures d'alkyl triphényl phosphonium et halogénures d'alkényl triphenyl phosphonium ; et

(d) entre 5 et 30% en poids, en se basant sur le poly(téréphtalate d'alkylène $C_2$-$C_4$), d'un polymère composite multiphase à base de butadiène ayant un noyau en élastomère de polybutadiène ou polybutadiène/styrène et une enveloppe thermoplastique de polyméthylméthacrylate.

**2.** Composition selon la revendication 1 où la composition de polyester thermoplastique contient au moins environ 60 pour cent en poids de polybutadiène téréphtalate ayant une viscosité intrinsèque entre 0,4 et 1,3 dl/g en déterminant dans l'orthochlorophénol à 25° C.

**3.** Composition selon la revendication 1 ou 2, où la résine diépoxyde de la formule (I) a un poids moléculaire entre 360 et 1.000 et où le catalyseur est le bromure d'allyl triphényl phosphonium ou le bromure de n-butyl triphényl phosphonium.

**4.** Composition selon la revendication 1, 2 ou 3 contenant de plus entre 1 et 100 pour cent en poids, en se basant sur le polyalkylène téréphtalate, de fibres de renforcement de verre.

**5.** Composition selon la revendication 1, 2 ou 3 contenant de plus un à 200 pour cent en poids, en se basant sur le polyalkylène téréphtalate, d'un polycarbonate aromatique.

**6.** Composition selon la revendication 1, 2 ou 3 contenant de plus un à 200 pour cent en poids, en se basant sur le polyalkylène téréphtalate, de polyarylate.

**7.** Composition selon la revendication 1, 2 ou 3 contenant de plus entre un et 100 pour cent en poids, en se basant sur le polyalkylène téréphtalate, d'une charge inerte.

**8.** Composition selon la revendication 1, 2 ou 3 contenant de plus jusqu'à vingt-cinq pour cent en poids, en se basant sur le polyalkylène téréphtalate, de l'additif ignifuge.

**9.** Composition de polyester thermoplastique ayant une meilleure résistance au choc, consistant essentiellement en un mélange de :

(a) au moins 60 pour cent en poids de polybutylène téréphtalate ayant une viscosité intrinsèque entre 0,5 et 1,0 en déterminant dans l'orthochlorophénol à 25° C ;

(b) entre 1,5 et 2,0% en poids, en se basant sur le polybutylène téréphtalate, d'une résine diépoxyde ayant un poids moléculaire entre 370 et 400 et consistant essentiellement en au moins un produit de condensation de bisphénol A et d'épichlorohydrine et représentée par la formule générale (I) :

Formule (I)

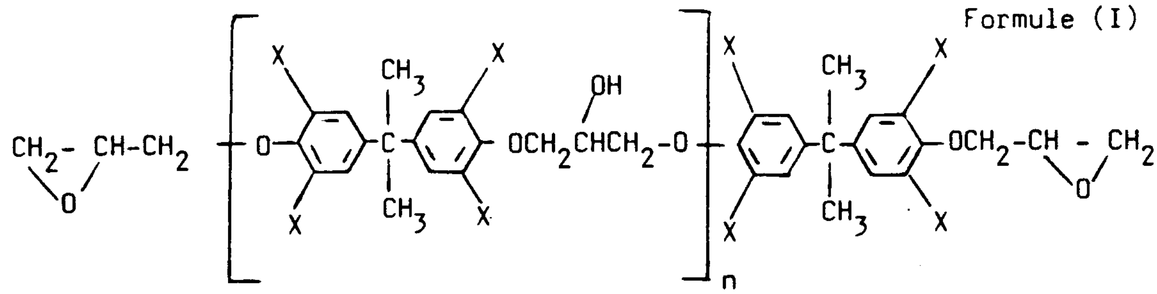

où n est un nombre moyen supérieur à zéro et inférieur à environ 2,3 ;
(c) une quantité catalytique d'au moins un catalyseur choisi dans le groupe consistant en bromure d'alkyl triphényl phosphonium et bromure d'alkényl triphényl phosphonium ; et
(d) entre 5 et 30% en poids, en se basant sur le polybutylène téréphtalate, d'un polymère composite multi-phase à base de butadiène ayant un noyau en élastomère de polybutadiène ou de polybutadiène/styrène et une enveloppe thermoplastique de polyméthylméthacrylate.

**10.** Composition selon la revendication 9 contenant de plus entre 5 et 100 pour cent en poids, en se basant sur le polybutylène téréphtalate, de fibres de renforcement de verre.

**11.** Composition selon la revendication 9 contenant de plus un à 200 pour cent en poids, en se basant sur le polybutylène téréphtalate, d'un polycarbonate aromatique.

**12.** Composition selon la revendication 9 contenant de plus un à 200 pour cent en poids, en se basant sur le polybutylène téréphtalate, de polyarylate.

**Patentansprüche**

**1.** Thermoplastische Polyester-Zusammensetzung mit verbesserter Schlagzähigkeit, umfassend eine Mischung aus:
(a) wenigstens 20 Gew.-% Poly($C_2$-$C_4$-alkylenterephthalat);
(b) zwischen 0,1 und 8 Gew.-%, bezogen auf Poly($C_2$-$C_4$-alkylenterephthalat), eines Diepoxid-Harzes mit einem Molekulargewicht zwischen 350 und 2100, bestehend im wesentlichen aus Wenigstens einem Kondensationsprodukt von Bisphenol A oder bromiertem Bisphenol A und Epihalogenhydrin, und dargestellt durch die allgemeine Formel (I):

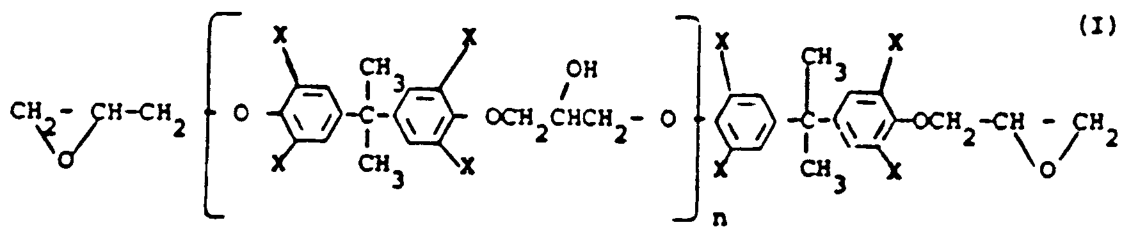

(I)

worin X Brom oder Wasserstoff ist, und n eine Durchschnittszahl größer null und kleiner als 2,3 ist;
(c) einer katalytischen Menge wenigstens eines Katalysators, ausgewählt aus der Gruppe bestehend aus Alkyltriphenylphosphoniumhalogeniden und Alkenyltriphenylphosphoniumhalogeniden; und
(d) zwischen 5 und 30 Gew.-%, bezogen auf Poly($C_2$-$C_4$-alkylenterephthalat), eines Mehrphasen-Verbundpolymers auf Butadien-Basis mit einem elastomeren Kern aus Polybutadien oder Polybutadien/Styrol und einer thermoplastischen Hülle aus Polymethylmethacrylat.

**2.** Zusammensetzung nach Anspruch 1, wobei die thermoplastische Polyester-Zusammensetzung wenigstens etwa 60 Gew.-% Polybutylenterephthalat mit einer Grenzviskosität zwischen 0,4 und 1,3 dl/g, gemessen in o-Chlorphenol bei 25° C, einschließt.

**3.** Zusammensetzung nach Anspruch 1 oder 2, wobei das Diepoxid-Harz der Formel (I) ein Molekulargewicht zwischen 360 und 1000 besitzt, und wobei der Katalysator Allyltriphenylphosphoniumbromid oder n-Butyltriphenylphosphoniumbromid ist.

**4.** Zusammensetzung nach Anspruch 1, 2 oder 3, die des weiteren zwischen 1 und 100 Gew.-%, bezogen auf Polyalkylenterephthalat, verstärkende Glasfasern enthält.

**5.** Zusammensetzung nach Anspruch 1, 2 oder 3, die des weiteren 1 bis 200 Gew.-%, bezogen auf Polyalkylenterephthalat, aromatisches Polycarbonat enthält.

**6.** Zusammensetzung nach Anspruch 1, 2 oder 3, die des weiteren 1 bis 200 Gew.-%, bezogen auf Polyalkylenterephthalat, Polyacrylat enthält.

**7.** Zusammensetzung nach Anspruch 1, 2 oder 3, die des weiteren zwischen 1 und 100 Gew.-%, bezogen auf Polyalkylenterephthalat, inertes Füllmittel enthält.

**8.** Zusammensetzung nach Anspruch 1, 2 oder 3, die des weiteren bis zu 25 Gew.-%, bezogen auf Polyalkylenterephthalat, Flammschutz-Additiv enthält.

**9.** Thermoplastische Polyester-Zusammensetzung mit verbesserter Schlagzähigkeit, im wesentlichen bestehend aus einer Mischung aus:
(a) wenigstens 60 Gew.-% Polybutylenterephthalat mit einer Grenzviskosität zwischen 0,5-1,0 dl/g, gemessen in o-Chlorphenol bei 25° C;
(b) zwischen 1,5 und 2,0 Gew.-%, bezogen auf Polybutylenterephthalat, eines Diepoxid-Harzes mit einem Molekulargewicht zwischen 370 und 400, bestehend im wesentlichen aus wenigstens einem Kondensationsprodukt von Bisphenol A und Epichlorhydrin, und dargestellt durch die allgemeine Formel (I):

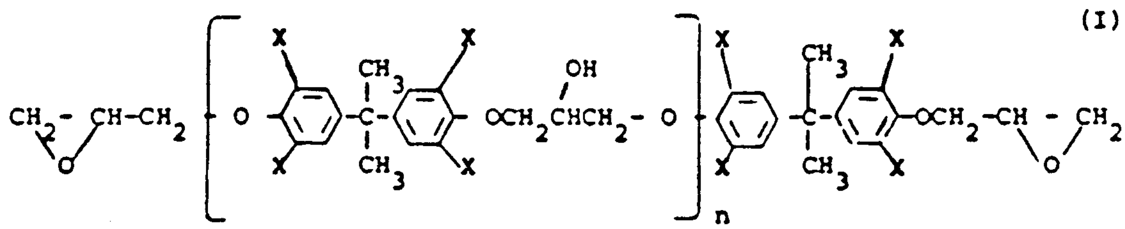

(I)

worin n eine Durchschnittszahl größer null und kleiner als 2,3 ist;
(c) einer katalytischen Menge wenigstens eines Katalysators, ausgewählt aus der Gruppe bestehend aus Alkyltriphenylphosphoniumbromiden und Alkenyltriphenylphosphoniumbromiden; und
(d) zwischen 5 und 30 Gew.-%, bezogen auf Polybutylenterephthalat, eines Mehrphasen-Verbundpolymers auf Butadien-Basis mit einem elastomeren Kern aus Polybutadien oder Polybutadien/Styrol und einer thermoplastischen Hülle aus Polymethylmethacrylat.

**10.** Zusammensetzung nach Anspruch 9, die des weiteren zwischen 5 und 100 Gew.-%, bezogen auf Polybutylenterephthalat, verstärkende Glasfasern enthält.

**11.** Zusammensetzung nach Anspruch 9, die des weiteren 1 bis 200 Gew.-%, bezogen auf Polybutylenterephthalat, aromatisches Polycarbonat enthält.

**12.** Zusammensetzung nach Anspruch 9, die des weiteren 1 bis 200 Gew.-%, bezogen auf Polybutylenterephthalat, Polyacrylat enthält.